# EUROPEAN PATENT APPLICATION

(11) **EP 2 106 070 A1**
(43) Date of publication of application: **30.09.2009**
(21) Application number: 08734222.6
(22) Date of filing: 30.04.2008
(51) Int. Cl.: H04L 12/28

(54) **METHOD, SYSTEM AND DEVICE FOR MAKING SECURITY CONTROL**

(30) Priority: 30.04.2007 CN 200710101580
(71) Applicant: Huawei Technologies Co., Ltd., Longgang District, Shenzhen Guangdong 518129 (CN)
(72) Inventor: DI, Jinwen, Shenzhen (CN); CHEN, Feng, Shenzhen (CN); Hou, Zhipeng, Shenzhen (CN); HUANG, Shibi, Shenzhen (CN); TAN, Shiyong, Shenzhen (CN)
(74) Representative: Kreuz, Georg Maria
(86) International application number: PCT/CN2008/070866
(87) International publication number: WO 2008/134985

(57) **Abstract**

A method, system and device for implementing security control are disclosed herein. The method for implementing security control includes: receiving, by the PCEF entity, security control policy information from the PCRF entity; and executing, by the PCEF entity, user security control according to the security control policy information. The embodiments of the present invention provide security control for the user session in the Policy Charging Control (PCC) architecture.

## Description

### FIELD OF THE INVENTION

The present invention relates to the communication field, and in particular, to a method and system for implementing security control, a Policy Control and Charging Rules Function (PCRF) entity, and a Policy and Charging Enforcement Function (PCEF) entity.

### BACKGROUND

Currently, the 3rd Generation Partnership Project (3GPP) defines a Policy Charging Control (PCC) architecture in the TS 23.203. The function entities in the PCC and their functions are: a PCRF obtains the subscription profile from the Subscription Profile Repository (SPR) function entity according to the restriction of the user access network and policy of the operator, obtains the currently underway service information of the user from the Application Function (AF) entity and decides the corresponding policy, and sends the policy to the Policy and Charging Enforcement Function (PCEF). The PCEF executes the policy. The policy includes: rules of detecting the service data flow (implementing a service, for example, voice IP flow collection), access control, Quality of Service (QoS) corresponding to the service data flow, and flow-based charging rules.
PCEF: implements the policy sent or specified by the PCRF, and more particularly, executes detection and measurement of service data flow, ensures the QoS of the service data flow, processes user-plane traffic, and triggers the control-plane session management;
SPR: provides a subscription profile for the PCRF; and
AF: provides application-layer session information for the PCRF dynamically so that the PCRF generates or modifies the corresponding rules dynamically according to the information.

The terms related to the IP-CAN session process are described below:
IP-CAN: an access network which maintains the IP service continuity (without interruption) when the user roams in the access network (the location changes), for example, General Packet Radio Service (GPRS) network, and I-WLAN (system of interworking between a Wireless Local Area Network (WLAN) and a 3GPP network);
IP-CAN bearer: an IP transmission path with a definite rate, delay and bit error rate (between the access network and the PCEF); for a GPRS, the IP-CAN bearer corresponds to the Packet Data Protocol (PDP) context; and
IP-CAN session: a connection relation between User Equipment (UE) and the Packet Data Network (PDN, such as Internet) identifier. The connection relation is identified through the IP address and identifier of the UE. The IP-CAN exists only if an IP address is allocated to the UE and is identifiable to the IP network. An IP-CAN session may include one or more IP-CAN bearers.

On the basis of this PCC architecture, the IP-CAN session process and the IP-CAN bearer creation process may be implemented. After the UE allocates an addressable IP address at the PDN, an IP-CAN session is created by the UE. In order to meet different QoS requirements, the IP-CAN bearers that meet different QoS requirements may be created in the same IP-CAN session. In each IP-CAN bearer, multiple IP flows may exist (for example, the user may download files under different servers). The PCEF identifies the IP flow according to the PCC rules (the PCC rules include an IP quintuplet), namely, IP source, destination address, source port ID, destination port ID, and protocol type. Each PCC rule may include one or more IP flows, called "service data flows". The PCC rules transferred by the PCRF to the PCEF through the Gx interface include: access control information, QoS control parameters, and charging parameters of service data flows. The PCEF may perform admission control for service flows, traffic monitoring and charging according to the control parameters in the PCC rules.

In the research process, the inventor finds at least the following defects in the prior art: the current PCC architecture is limited to the scenarios of the determined service data flows (for example, IP Multimedia Subsystem (IMS)), and is not applicable to the scenario of data service access control. In the prior art, it is not possible for a network to control different security policies according to different policy conditions, improve the network security and broaden the application of data services.

### SUMMARY

The present invention provides a method and system for implementing security control, a PCRF entity, and a PCEF entity in order to provide security control for the user session in the PCC architecture.

According to a first aspect of the invention the method for implementing security control includes in its preferred implementation form: receiving, by the PCEF entity, security control policy information from the PCRF entity; and executing, by the PCEF entity, user security control according to the security control policy information.

According to a second aspect of the invention the system for executing security control includes in its preferred implementation form a PCEF entity, a PCRF entity, a receiving module, and an executing module. The receiving module is connected with the PCEF entity and configured to receive security control policy information from the PCRF entity. The executing module is connected with the PCEF entity and configured to execute user security control according to the security control policy information.

According to a third aspect of the invention the PCRF entity includes in its preferred implementation form: a sending module, configured to send the security control policy information to the PCEF entity after making a judgment according to the policy condition information of the user and generating security control policy information.

The PCEF entity executes user security control according to the security control policy information.

According to a fourth aspect of the invention the PCEF entity includes in its preferred implementation form: a receiving module, configured to receive security control policy information from the PCRF entity; and an executing module, configured to execute user security control according to the security control policy information.

The implementation forms of the invention provide the following benefits:

After receiving security control policy information from the PCRF entity, the PCEF entity executes user security control according to the security control policy information, and thus is capable of controlling the session accessed by the user.

### BRIEF DESCRIPTION OF THE DRAWINGS

Figure 1 is a flowchart of a method for executing security control in an embodiment of the present invention;

Figure 2 is a flowchart of an embodiment of the present invention;

Figure 3 is a flowchart of another embodiment of the present invention;

Figure 4 shows a structure of a system for executing security control in an embodiment of the present invention;

Figure 5 shows a structure of a system for executing security control in another embodiment of the present invention;

Figure 6 shows a structure of a system for executing security control in another embodiment of the present invention;

Figure 7 shows a structure of a PCRF entity in an embodiment of the present invention;

Figure 8 shows a structure of a PCRF entity in another embodiment of the present invention;

Figure 9 shows a structure of a PCEF entity in an embodiment of the present invention; and

Figure 10 shows a structure of a PCEF entity in another embodiment of the present invention.

### DETAILED DESCRIPTION

The invention is hereinafter described in detail by reference to embodiments and accompanying drawings.

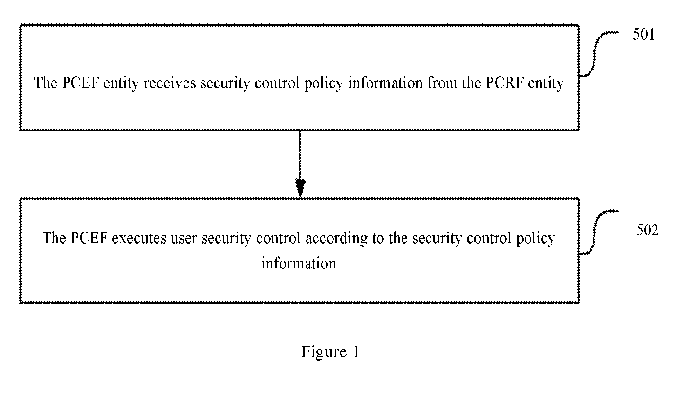

Figure 1 is a flowchart of a method for executing security control. The method includes:

Step 501: The PCEF entity receives security control policy information from the PCRF; and

Step 502: The PCEF executes user security control according to the security control policy information.

In the embodiment, the security control policy information includes Access Control List (ACL) information, and firewall mode information.

Execution of the user security control function includes: executing access control for the user service data flows according to the ACL information; and/or selecting the firewall of the corresponding mode for the user service data flow according to the firewall mode information, and executing the firewall function.

Executing access control may be: executing admission access control for the user service data flow according to one or any combination of: IP address, port number, protocol type, and application type allowed for accessing in the ACL specified in the ACL information.

Executing the firewall function may be: selecting a firewall of one or any combination of: packet filtering mode, deep detection mode, spam filtering function, and virus filtering function according to the firewall mode specified in the firewall mode information, and executing the firewall function for the user service data flow.

The security control policy information may be sent by the PCRF entity to the PCEF entity through a Credit Control Request (CCR) message or Re-Authentication Request (RAR) message.

The security control policy information may be ACL information, and/or firewall mode information sent through a CCR message or RAR message to the PCEF entity.

The ACL information may be represented by adding an Access Control List Number (ACL-Number) Attribute Value Pair (AVP) in the Diameter protocol of the Gx interface.

The firewall mode information may be represented by adding a Firewall-Mode-Number AVP in the Diameter protocol of the Gx interface.

In the implementation, the PCRF entity sends the security control policy information to the PCEF entity after making a judgment according to the policy condition information of the user and generating security control policy information.

The PCEF entity executes user security control according to the security control policy information.

The PCRF entity makes a judgment according to the policy condition information of the user and generates ACL information. The user policy condition information of the user may be one or any combination of "software version of the UE, version of the operating system, patches of the operating system, information about whether antivirus software is installed and version of the antivirus software" and is obtained from one item of or combination of "PCEF entity, Network Management System (NMS), and device management system".

The PCRF entity makes a judgment according to the policy condition information of the user and generates firewall mode information. The policy condition information of the user is one item of or combination of "subscription profile, user access network type, and user roaming state".

Through the embodiment of providing diversified security control policy information the user, the mode of executing security control is further described below.

This embodiment is an application instance of deciding policies according to the information such as software version of the UE, version of the operating system, patches of the operating system, and/or information about whether antivirus software is installed and version of the antivirus software, generating security control policy information, and implementing admission control for the user through the security control policy information. When the user creates an IP access session, the PCRF obtains the software version of the UE, version of the operating system, patches of the operating system, and/or information about whether antivirus software is installed and version of the antivirus software from the device management system. According to the obtained information, the PCRF makes a judgment and generates security control policy information which includes an ACL applicable to the UE, and then sends the information to the PCEF for admission control processing.

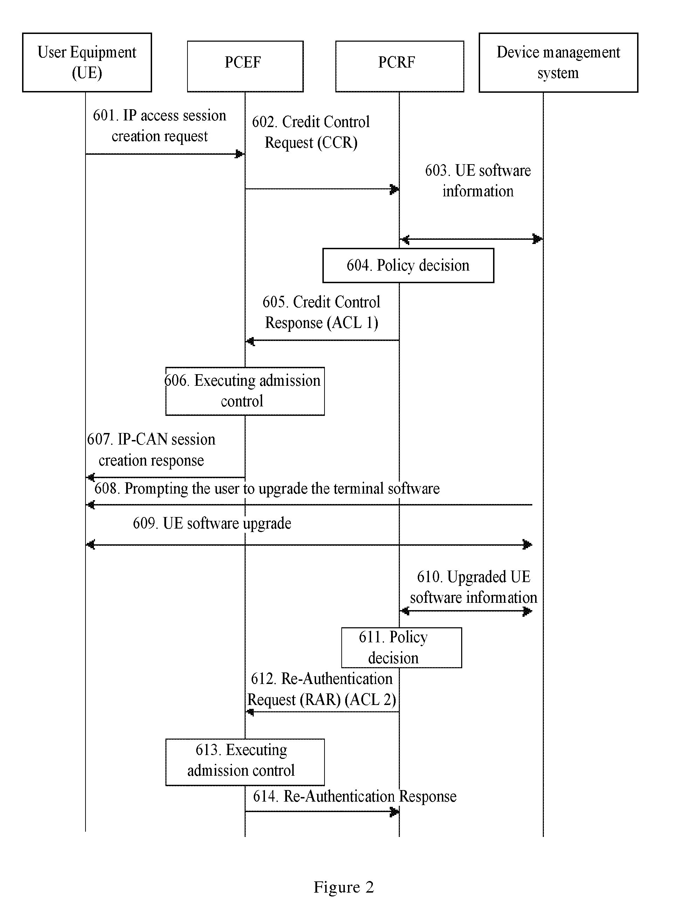

Figure 2 is a flowchart of an embodiment, which includes the following steps:

Step 601: The user sends an IP access session creation request to the PCEF.

Step 602: The PCEF sends a CCR message to the PCRF in order to trigger the PCRF to return the security control policy information. The CCR message carries UE information.

Step 603: Through a device management system, the PCRF obtains the software version of the UE, version of the operating system, patches of the operating system, and/or information about whether antivirus software is installed and version of the antivirus software through the device management system.

Step 604: The PCRF makes a judgment, and generates security control policy information. According to the obtained information, the PCRF decides the ACL 1 applicable to the UE. The security control policy information includes ACL 1.

Step 605: The PCRF sends a credit control response message to PCEF, the message carrying information on the ACL 1 of the UE.

Step 606: According to the information on the received ACL 1, the PCEF performs admission control, and admits or rejects the user data flow that passes through the PCEF.

Step 607: The PCEF sends an IP access session creation response to the UE.

Step 608: When the device management system detects that the software version of the UE is not the expected latest version, the device management system may prompt the user to upgrade the software version of the UE.

Step 609: The UE upgrades the software through the device management system.

Step 610: The device management system sends software information of the upgraded UE to the PCRF.

Step 611: The PCRF makes a judgment and generates security control policy information. According to the software information of the upgraded UE, the PCRF decides the ACL 2 applicable to the UE. The security control policy information includes ACL 2.

Step 612: The PCRF sends an RAR message to PCEF, the message carrying information on the ACL 2 of the UE.

Step 613: According to the information on the received ACL 2, the PCEF performs admission control, and admits or rejects the user data flow that passes through the PCEF.

Step 614: The PCEF sends a re-authentication response message to the PCRF.

As revealed in this embodiment, admission control may be performed for the user according to the software information of the UE. When the software version or configuration of the UE does not meet the network security requirements, the network resources accessible to the UE may be restricted, for example, only the access device management system is allowed to perform software upgrade, and the UE is allowed to access the subscribed network resources of other users after the software version or configuration of the UE meets the network security requirements. In this way, the UE that does not meet the security requirements (for example, the UE with operating system loopholes, UE without antivirus software) is prevented from accessing the network, thus avoiding latent risks on the network, enhancing the network security on the whole, reducing network security faults and cutting back costs of network operation and maintenance.

This embodiment determines that a firewall mode should be provided for the user according to the conditions such as subscription profile, user access network type, and roaming state of the user, and sends the firewall mode to the PCEF for processing.

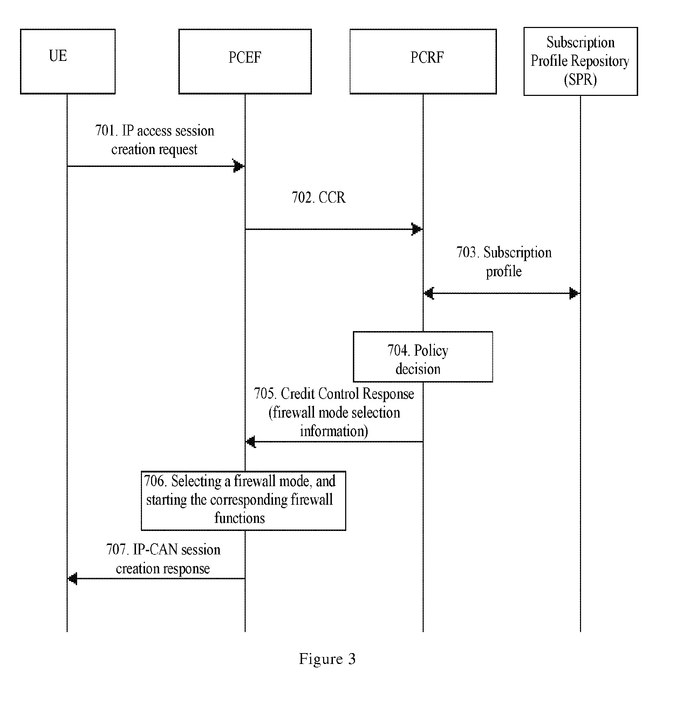

Figure 3 is a flowchart of another embodiment, which includes the following steps:

Step 701: The user sends an IP access session creation request to the PCEF.

Step 702: The PCEF sends a CCR message to the PCRF in order to trigger the PCRF to return the security control policy information. The CCR message carries the type of the access network currently in use, and roaming information.

Step 703: The PCRF obtains subscription profile through the SPR. The subscription information includes the subscribed firewall mode of the user.

Step 704: According to the policy conditions such as subscription profile, access network type, and roaming state of the user, the PCRF makes a judgment and generates security control policy information. The security control policy information includes the firewall mode information that should be provided for the user. If the security control policy information is generated according to the subscription profile and the user subscribes to the firewall mode, the subscription information needs to be applied; otherwise, different firewall modes predefined by the operator are provided for different user access network types. For example, the firewall function mode provided for the user who accesses through a WLAN is different from that provided for the user who accesses through Wideband CDMA (WCDMA); or no firewall function is provided for the roaming user.

Step 705: The PCRF sends a credit control response message to PCEF, the message carrying the Firewall Mode Number information of the user.

Step 706: According to the received firewall mode information, the PCEF selects the firewall mode for the access user, and starts the firewall function.

Step 707: The PCEF sends an IP access session creation response to the UE.

As described above, in this embodiment, firewall functions of different combinations may be provided for the user according to the policy condition information such as subscription profile, access network type, and roaming state of the user, thus making the most of the firewall function and ensuring security for the user.

A system for executing security control is provided in an embodiment of the present invention. The implementation mode of the system is described below by reference to accompanying drawings.

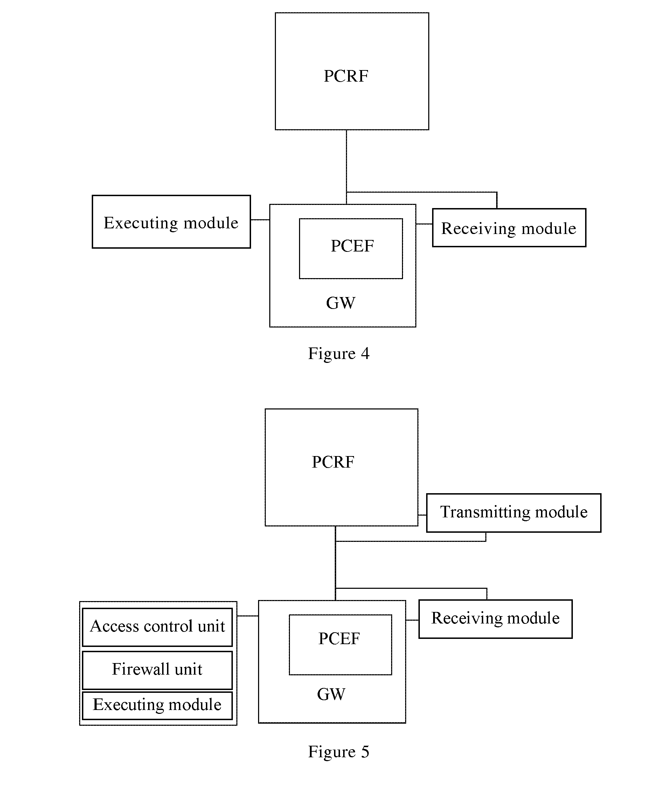

As shown in Figure 4, a structure of a system for executing security control in an embodiment of the present invention includes: a PCEF entity, a PCRF entity, a receiving module, and an executing module.

The receiving module and the executing module are connected with the PCEF entity.

The receiving module receives security control policy information from the PCRF entity.

The executing module executes user security control according to the security control policy information.

The security control policy information may include ACL information and firewall mode information.

Figure 5 shows a structure of a system for executing security control in another embodiment of the present invention. As shown in Figure 5, the executing module in this embodiment may include an access control unit, and/or a firewall unit.

The access control unit is configured to execute access control for the user service data flow according to the ACL information.

The firewall unit is configured to select a firewall of the corresponding mode for the user service data flow according to the firewall mode information, and executes the firewall function.

The access control unit may be further configured to execute admission access control for the user service data flow according to one or any combination of: IP address, port number, protocol type, and application type allowed for accessing in the ACL specified in the ACL information.

The firewall unit may be further configured to select a firewall of one or any combination of: packet filtering mode, deep detection mode, spam filtering function, and virus filtering function according to the firewall mode specified in the firewall mode information, and execute the firewall function for the user service data flow.

The receiving module may receive the security control policy information through a CCR message or an RAR message.

The security control policy information may be ACL information and/or firewall mode information.

The ACL information may be represented by adding an Access Control List Number Attribute Value Pair (ACL-Number AVP) in the Diameter protocol of the Gx interface.

The firewall mode information may be represented by adding a Firewall-Mode-Number AVP in the Diameter protocol of the Gx interface.

The system may further include a sending module, configured to send the security control policy information to the PCEF entity after the PCRF entity makes a judgment according to the policy condition information of the user and generates security control policy information.

The PCEF entity executes user security control according to the security control policy information.

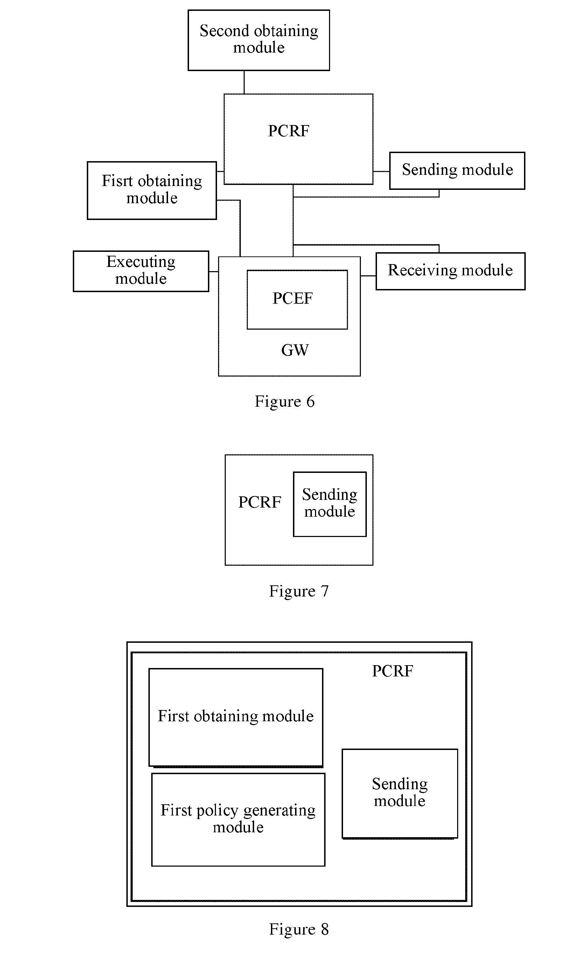

Figure 6 shows a structure of a system for executing security control in another embodiment of the present invention. As shown in Figure 6, the system may further include a first obtaining module and/or a second obtaining module.
The first obtaining module is configured to obtain policy condition information from one or any combination of: PCEF entity, NMS, and device management system. The policy condition information is one or any combination of: software version of the UE, version of the operating system, patches of the operating system, information about whether antivirus software is installed and version of the antivirus software.
The PCRF entity makes a judgment according to the policy condition information and generates ACL information.
The second obtaining module is configured to obtain the policy condition information which is one or any combination of: subscription profile, access network type of the user, and roaming state of the user.
The PCRF entity makes a judgment according to the policy condition information of the user and generates firewall mode information.

A PCRF entity is provided in an embodiment of the present invention. The implementation mode of the PCRF is described below by reference to accompanying drawings.

Figure 7 shows a structure of a PCRF entity in an embodiment of the present invention. As shown in Figure 7, the PCRF includes a sending module, configured to send the security control policy information to the PCEF entity after making a judgment according to the policy condition information of the user and generating security control policy information.

The PCEF entity executes user security control according to the security control policy information.

Figure 8 shows a structure of a PCRF entity in another embodiment of the present invention. As shown in Figure 8, the PCRF may further include: a first policy generating module, a first obtaining module, and/or a second policy generating module, and a second obtaining module. Figure 8 illustrates only the first obtaining module and the first policy generating module.

The first obtaining module is configured to obtain policy condition information from one or any combination of: PCEF entity, NMS, and device management system. The policy condition information is one or any combination of: software version of the UE, version of the operating system, patches of the operating system, information about whether antivirus software is installed and version of the antivirus software.

The first policy generating module is configured to make a judgment according to the policy condition information, and generate ACL information of security control policy information.

The second obtaining module is configured to obtain the policy condition information which is one or any combination of: subscription profile, access network type of the user, and roaming state of the user.

The second policy generating module is configured to make a judgment according to the policy condition information of the user, and generate firewall mode information of security control policy information.

A PCEF entity is provided in an embodiment of the present invention. The implementation mode of the PCEF is described below by reference to accompanying drawings.

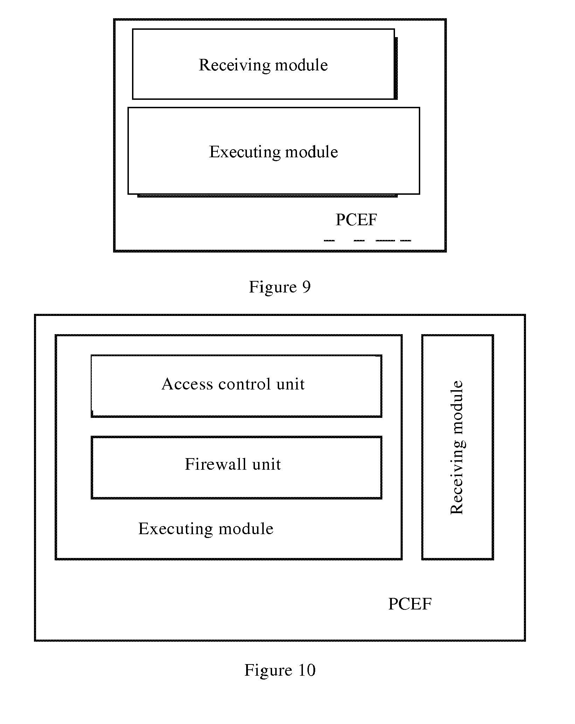

Figure 9 shows a structure of a PCEF entity in an embodiment of the present invention. As shown in Figure 9, the PCEF includes: a receiving module, configured to receive security control policy information from the PCRF entity; and an executing module, configured to execute user security control according to the security control policy information.

Figure 10 shows a structure of a PCEF entity in another embodiment of the present invention. As shown in Figure 10, the executing module in this embodiment may include an access control unit, and/or a firewall unit.

The access control unit executes access control for the user service data flow according to the ACL information.

The firewall unit selects a firewall of the corresponding mode for the user service data flow according to the firewall mode information, and executes the firewall function.

The receiving module is further configured to receive the security control policy information through a CCR message or an RAR message.

In this embodiment, the operator may predefine ACLs as required, and set them in the firewall function module of the PCEF. When the creates an IP-CAN session, the PCRF obtains the software version of the UE, version of the operating system, patches of the operating system, and/or information about whether antivirus software is installed and the version of the antivirus software from the PCEF, NMS, or device management system, and decides the ACL information that should be provided for the user according to such policy condition information. The PCRF may use a Diameter CCA or RAR message to send the ACL number configured on the PCEF to the PCEF. The ACL information may be represented by adding an ACL-Number AVP in the Diameter protocol of the Gx interface. The AVP is a 32-digit integer type, and may have different values depending on different ACLs. The PCRF may send an ACL number, or the PCRF may send the specific definition of the ACL to the PCEF directly, for example, IP address, port number, protocol type, and application type allowed for accessing. The PCEF may execute the corresponding admission control according to the ACL information sent by the PCRF.

In addition, the operator may integrate the multiple control modes (for example, packet filtering mode, and deep detection mode) of the firewall, or different functions (for example, spam filtering, and virus filtering) as required, and preset multiple firewall function modes, each of which may be identified uniquely by a number and set in the PCEF. When the user accesses the session, the PCRF identifies the firewall mode that should be provided for the user according to the subscription profile, access network type of the user, or roaming state of the user. Through the Gx interface connected with the PCEF, the PCRF transfers the firewall mode information of the user to the PCEF. For example, the PCRF may send the firewall mode information of the user to the PCEF through a Diameter RAR or CCA message. The firewall mode information may be represented by adding a Firewall-Mode-Number AVP in the Diameter protocol type of the Gx interface. The AVP is a 32-digit integer type. According to the firewall mode information sent by the PCRF, the PCEF executes the corresponding firewall mode, and selects and starts the corresponding firewall functions.

With the network security problem spreading across the telecom network, the network security protection function that integrates the firewall function and the admission control is provided on the PCEF, and has become an important function of the gateway device. The application of such security protection function is of high significance to enhancing the security of the whole network, reducing network security faults and cutting back costs of network operation and maintenance of the operator. The method, system and device for executing security control in an embodiment of the present invention may judge the policy according to the complicated changing policy conditions, and perform different security protection functions under different policy conditions.

The foregoing embodiments reveal that when the PCC architecture in the prior art is not capable of security policy control, the embodiments of the present invention realize the objectives of enhancing the functions of the PCC architecture. Therefore, the PCEF may implement security protection functions such as security admission control, access control, firewall function mode selection for the user effectively according to the security control policy information sent by the PCRF.

Moreover, the service admission control enables the operator to predefine ACLs as required. After the user accesses the session, the PCRF decides the ACL information that matches the user by analyzing the information such as operating system of the UE, patches of the operating system, and antivirus software of the UE, and sends the ACL information through a Gx interface to the PCEF for executing, thus controlling the service data flows of the UE.

The control of selecting the firewall mode for the user service flow enables the operator to encapsulate the multiple control modes or different functions of the firewall as required, and preset different firewall modes for executing firewall functions. When the user accesses the session, the PCRF may determine the firewall mode that should be provided for the user according to the conditions such as subscription profile, current access network type of the user, and roaming state of the user, and send the firewall mode through a Gx interface to the PCEF device for executing, thus enabling selection of the firewall mode for the service flow.

Although the invention has been described through some exemplary embodiments, the invention is not limited to such embodiments. It is apparent that those skilled in the art can make various modifications and variations to the present invention without departing from the scope of the present invention. The present invention is intended to cover these modifications and variations provided that they fall in the scope of protection defined by the claims or their equivalents.

## Claims

1. A method of implementing security control, comprising:
receiving, by a Policy and Charging Enforcement Function, PCEF, entity, security control policy information from a Policy Control and Charging Rules Function, PCRF, entity; and
executing, by the PCEF entity, user security control according to the security control policy information.

2. The method of claim 1, wherein the security control policy information comprises Access Control List, ACL, information and firewall mode information.

3. The method of claim 2, wherein the executing user security control comprises:
executing access control for user service data flows according to the ACL information; and/or
selecting a firewall of the corresponding mode for the user service data flow according to the firewall mode information, and executing the firewall function.

4. The method of claim 3, wherein the executing user security control comprises:
executing admission access control for the user service data flow according to at least one or any combination of: IP address, port number, protocol type, and application type allowed for accessing in the ACL specified in the ACL information; and
selecting a firewall of at least one or any combination: packet filtering mode, deep detection mode, spam filtering function, and virus filtering function according to the firewall mode specified in the firewall mode information, and executing the firewall function for the user service data flow.

5. The method of claim 1 or 2, wherein the receiving security control policy information comprises:
receiving, by the PCEF entity, the security control policy information sent by the PCRF entity through a Credit Control Request, CCR, message or a Re-Authentication Request, RAR, message.

6. The method of claim 5, wherein the PCEF entity receives the security control policy information of the ACL information and/or the firewall mode information sent through the CCR message or the RAR message.

7. The method of claim 6, wherein:
the ACL information is represented by adding an Access Control List Number Attribute Value Pair, ACL-Number AVP, in the Diameter protocol of a Gx interface; and
the firewall mode information is represented by adding a Firewall-Mode-Number AVP in the Diameter protocol of the Gx interface.

8. The method of claim 1, the receiving security control policy information from the PCRF entity comprises:
receiving, by the PCRF entity, the security control policy information generated by the PCRF entity upon making a judgment according to the policy condition information of the user.

9. The method of claim 8, wherein the security control policy information generated by the PCRF entity upon making a judgment according to the policy condition information of the user comprises:
security control policy information generated by the PCRF entity upon making a judgment according to the policy condition of a user, wherein the policy condition information of the user is one or any combination of: software version of a User Equipment, UE, version of an operating system, patches of the operating system, information about whether antivirus software is installed and version of the antivirus software, and is obtained from one or any combination of the PCEF entity, a Network Management System, NMS, and a device management system;
and/or firewall mode information generated by the PCRF entity upon making a judgment according to the policy condition information of a user, wherein the policy condition information of the user is one or any combination of subscription profile, user access network type, and user roaming state.

10. A system for executing security control, comprising a Policy Control and Charging Enforcement Function, PCEF, entity, a Policy Control and Charging Rules Function, PCRF, entity wherein the system comprises a receiving module, and an executing module, wherein:
the receiving module is connected with the PCEF entity and configured to receive security control policy information from the PCRF entity; and
the executing module is connected with the PCEF entity and configured to execute user security control according to the security control policy information.

11. The system of claim 10, wherein the security control policy information comprises Access Control List, ACL, information and firewall mode information.

12. The system of claim 11, wherein the executing module comprises an access control unit, and/or a firewall unit, wherein the access control unit is configured to execute access control for the user service data flow according to the ACL information; and the firewall unit is configured to select a firewall of the corresponding mode for the user service data flow according to the firewall mode information, and execute the firewall function.

13. The system of claim 12, wherein:
the access control unit is further configured to execute admission access control for the user service data flow according to one or any combination of: IP address, port number, protocol type, and application type allowed for accessing in an ACL specified in the ACL information; and
the firewall unit is further configured to select a firewall of one or any combination of: packet filtering mode, deep detection mode, spam filtering function, and virus filtering function according to the firewall mode specified in the firewall mode information, and execute the firewall function for the user service data flow.

14. The system of claim 10 or 11, wherein the receiving module is further configured to receive the security control policy information sent by the PCRF entity through a Credit Control Request, CCR, message or a Re-Authentication Request, RAR, message.

15. The system of claim 14, wherein the security control policy information is the ACL information and/or the firewall mode information.

16. The system of claim 15, wherein:
the ACL information is represented by adding an Access Control List Number Attribute Value Pair, ACL-Number AVP, in the Diameter protocol of a Gx interface; and
the firewall mode information is represented by adding a Firewall-Mode-Number AVP in the Diameter protocol of the Gx interface.

17. The system of claim 10, further comprising a sending module, configured to send the security control policy information to the PCEF entity after making a judgment according to the policy condition information of the user and generating security control policy information.

18. The system of claim 17, further comprising a first obtaining module and/or a second obtaining module, wherein:
the first obtaining module is configured to obtain policy condition information from one or any combination of: the PCEF entity, a Network Management System, NMS, and a device management system, the policy condition information is one or any combination of: software version of a User Equipment, UE, version of the operating system, patches of the operating system, information about whether antivirus software is installed and version of the antivirus software, wherein the PCRF entity makes a judgment according to the policy condition information and generates Access Control List, ACL, information;
the second obtaining module is configured to obtain the policy condition information which is one or any combination of: subscription profile, access network type of the user, and roaming state of the user, wherein the PCRF entity makes a judgment according to the policy condition information of the user and generates firewall mode information.

19. A Policy and Charging Enforcement Function, PCEF, entity, comprising:
a receiving module, configured to receive security control policy information from a Policy Control and Charging Rules Function, PCRF, entity; and
an executing module, configured to execute user security control according to the security control policy information.

20. The PCEF entity of claim 19, wherein the executing module comprises an access control unit, and/or a firewall unit, wherein:
the access control unit is configured to execute access control for the user service data flow according to Access Control List, ACL, information;
the firewall unit is configured to select a firewall of the corresponding mode for the user service data flow according to the firewall mode information, and executes the firewall function.

21. The PCEF entity of claim 19 or 20, wherein the receiving module is further configured to receive the security control policy information sent by the PCRF entity through a Credit Control Request, CCR, message or a Re-Authentication Request, RAR, message.

22. A Policy Control and Charging Rules Function, PCRF, entity comprising:
a sending module, configured to send the security control policy information to a Policy Control and Charging Enforcement Function, PCEF, entity after making a judgment according to the policy condition information of the user and generating security control policy information.

23. The PCRF entity of claim 22, further comprising a first policy generating module and a first obtaining module, and/or, a second policy generating module and a second obtaining module, wherein:
the first obtaining module is configured to obtain policy condition information from one or any combination of: a PCEF entity, a Network Management System, NMS, and a device management system, wherein the policy condition information is one or any combination of: software version of a User Equipment, UE, version of the operating system, patches of the operating system, information about whether antivirus software is installed and version of the antivirus software;
the first policy generating module is configured to make a judgment according to the policy condition information, and generate Access Control List, ACL, information of security control policy information;
the second obtaining module is configured to obtain the policy condition information which is one or any combination of: subscription profile, user access network type, and roaming state of the user;
the second policy generating module is configured to make a judgment according to the policy condition information of the user and generate firewall mode information of security control policy information.
